(19) Europäisches Patentamt
European Patent Office
Office européen des brevets

(11) **EP 0 890 833 A2**

(12) **EUROPÄISCHE PATENTANMELDUNG**

(43) Veröffentlichungstag:
13.01.1999 Patentblatt 1999/02

(51) Int. Cl.⁶: **G01N 25/60**

(21) Anmeldenummer: 98111038.0

(22) Anmeldetag: 16.06.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.07.1997 DE 19729799**

(71) Anmelder:
**MMM MÜNCHENER MEDIZIN MECHANIK GMBH
D-81369 München (DE)**

(72) Erfinder:
• **Hofmann, Ludwig
81377 München (DE)**
• **Stricker, Ralf
57319 Bad Berleburg (DE)**

(74) Vertreter:
**Grünecker, Kinkeldey,
Stockmair & Schwanhäusser
Anwaltssozietät
Maximilianstrasse 58
80538 München (DE)**

(54) **Verfahren zur Bestimmung des kalorischen Zustandes von Dampf, insbesondere zur Bestimmung der Dampfnässe von Nassdampf und Vorrichtung hierzu**

(57) Die Erfindung betrifft ein Verfahren zur Bestimmung des kalorischen Zustandes von Dampf, insbesondere zur Bestimmung der Dampfnässe von Naßdampf sowie eine Vorrichtung hierzu. Erfindungsgemäß wird eine Naßdampf-Teilmenge kontinuierlich einer Kühleinrichtung zugeführt und kondensiert, wobei das sich dabei bildende Kondensat kontinuierlich aus der Kühleinrichtung abgeführt wird. Der Massenstrom des abgeführten Kondensates und die gleichzeitig durch den Naßdampf der Kühleinrichtung zufließende Heizleistung werden erfaßt und basierend auf dem Kondensat-Massenstrom und der erfaßten momentanen Heizleistung der Momentanwert der Dampfnässe errechnet.

FIG.1

**Beschreibung**

Die Erfindung betrifft ein Verfahren und eine Vorrichtung zur Erfassung des kalorischen Zustandes von Dampf, insbesondere zur Bestimmung der Dampfnässe von Naßdampf.

Als Naßdampf wird im folgenden ein Dampf-Medium bezeichnet, das nur zum Teil aus gesäftigtem Dampf besteht. Der Anteil der Masse des gesättigten Dampfes an der gesamten Masse des Dampfes wird als Dampfgehalt "X" bezeichnet. Der Wert "1-X" wird im folgenden als Dampfnässe des Naßdampfes bezeichnet.

Die Erfassung des kalorischen Zustandes von Dampf ist bei technischen Anwendungen, beispielsweise der Verwendung von Dampf als Arbeitsmedium in Maschinen, bei der Verwendung von Dampf bei chemischen Prozessen, und insbesondere bei der Verwendung von Dampf als Heizmedium von Bedeutung.

Handelt es sich bei diesem Dampf ausschließlich um Sattdampf oder überhitzten Dampf, so ist der kalorische Zustand des Dampfes eindeutig durch Druck und Temperatur bestimmt.

Besteht das Dampf-Medium nur zum Teil aus Sattdampf, so ist der kalorische Zustand dieses Dampf-Mediums durch die Angabe des Dampfgehaltes (X) zusätzlich zu Druck und Temperatur eindeutig bestimmt.

Der kalorische Zustand von Naßdampf läßt sich bei zu erwartenden hohen Werten von X auf einfache Weise dadurch ermitteln, daß der Dampf durch adiabate Drosselung auf einen Heißdampfzustand entspannt wird. Durch Messung von Druck und Temperatur dieses Heißdampfes sowie unter Berücksichtigung des im Rahmen der adiabaten Drosselung durchlaufenen Druckgefälles kann auf den kalorischen Zustand des vor der adiabaten Drosselung vorliegenden Naßdampfes geschlossen werden.

Bei einem Dampfgehalt von üblicherweise weniger als 0,95 % und einem Dampfdruck von weniger als 10bar ist es möglich, zur Erfassung des Dampfgehaltes eine Teildampfmenge in ein Gefäß zu leiten, daß mit einer vorgegebenen Menge kalten Wassers gefüllt ist. Der zugeführte Dampf kondensiert und füllt allmählich das Gefäß. Anhand des Gefäßfüllstandes und der Temperatur des Wassers in dem Gefäß kann über eine Referenztabelle der Dampfgehalt des untersuchten Dampfes bestimmt werden.

Die Meßgenauigkeit der bekannten Verfahren kann durch Vergrößerung der zur Dampf-Analyse abgezweigten Teildampfmengen gesteigert werden.

Das Abzweigen der zur Analyse vorgesehenen Dampfmengen stellt jedoch einen Eingriff in das zu analysierende Dampfsystem dar, dessen Auswirkungen auf die Aussagefähigkeit der gewonnenen Meßergebnisse nur schwer abschätzbar sind. Durch das Abzweigen der zur Durchführung der üblichen Meßverfahren erforderlichen Dampfmengen ergeben sich je nach Ausführungsform des Dampfversorgungssystemes Abweichungen zwischen der ermittelten Dampfnässe und der in dem System unter ungestörten Betriebsbedingungen herrschenden Dampfnässe.

Im Hinblick auf die vorangehend dargelegte Problematik liegt der Erfindung die Aufgabe zugrunde, ein Verfahren anzugeben, das eine präzise Bestimmung des an einem Untersuchungsort tätsächlich vorliegenden Dampfzustandes, insbesondere im Hinblick auf die Dampfnässe ermöglicht.

Diese Aufgabe wird erfindungsgemäß durch das im Patentanspruch 1 angegebene Verfahren gelöst.

Dadurch wird es auf vorteilhafte Weise möglich, durch Abzweigen von vergleichsweise geringen Dampfmengen, beispielsweise von weniger als 1 kg/h die Dampfnässe und den kalorischen Zustand des Dampfes in einem Dampfsystem, beispielsweise einer Versorgungsleitung kontinuierlich und im wesentlichen rückwirkungsfrei zu überwachen. Durch das erfindungsgemäße Verfahren wird es insbesondere möglich, anhand kleiner kontinuierlich abgezweigter Massenströme zeitliche Änderungen der Dampfnässe zu erfassen und aufzuzeichnen.

In vorteilhafter Weise wird der Momentanwert der Dampfnässe auf Grundlage des Momentanwertes des Kondensat-Massenstromes und dem Momentanwert der der Kühleinrichtung zufließenden Heizleistung in Verbindung mit dem über eine Druckerfassungseinrichtung erfaßten Druck des vorliegenden Dampfes ermittelt. Alternativ zu der Erfassung des Druckes des Dampfes ist es auch möglich, die Temperatur des Dampfes zu erfassen und anhand der erfaßten Temperatur in Verbindung mit dem momentanen Kondensatmassenstrom und der momentanen Heizleistung den Momentanwert der Dampfnässe zu bestimmen. Es ist auch möglich, sowohl die Temperatur als auch den Druck des Dampfes zu erfassen, wobei durch die kombinierte Berücksichtigung dieser beiden Größen eine besonders genaue Ermittlung des Momentanwertes des Dampfzustandes, insbesondere der Dampfnässe möglich wird.

Der der Kühleinrichtung zuströmende Naßdampf wird kontinuierlich kondensiert und die hierbei zugeführte Energie wird permanent durch die Kühleinrichtung abgeführt. Hierzu wird die Kühleinrichtung in vorteilhafter Weise kontinuierlich von einem Kühlfluid durchströmt, wobei die Ausgangstemperatur des Kühlfluides nach Durchlauf der Kühleinrichtung erfaßt wird. In vorteilhafter Weise wird auch die Eingangstemperatur des Kühlfluides vor Eintritt in die Kühleinrichtung erfaßt. Auf die Erfassung der Eingangstemperatur des Kühlfluides vor Eintritt in die Kühleinrichtung kann dann verzichtet werden, wenn anderweitig sichergestellt ist, daß die Eingangstemperatur des Kühlfluides auf einem vorbestimmten Wert gehalten wird. Auf Grundlage der bekannten Eingangstemperatur des Kühlfluides und der erfaßten Ausgangstemperatur des Kühlfluides kann unter Messung des Kühlfluid-Massenstromes die der Kühleinrichtung durch den Naßdampf zugeführte Heizleistung bzw. der momentane Wärmestrom erfaßt werden.

Anhand der erfaßten Heizleistung kann in Verbindung mit dem momentanen Kondensatmassenstrom die spezifische Enthalpie des der Kühleinrichtung zuströmenden Naßdampfes ermittelt werden. Anhand der ermittelten momentanen spezifischen Enthalpie des zuströmenden Naßdampfes und dem momentanen Druck oder Temperaturwert kann die momentane Dampfnässe des Naßdampfes errechnet werden. Die Errechnung der Dampfnässe aus der momentanen spezifischen Enthalpie und dem momentan gemessenen Druck oder Temperaturwert kann anhand einer Näherungsfunktion oder unter Rückgriff auf ein Kennfeld erfolgen, die bzw. das im wesentlichen den in dem h-s-Diagramm nach Mollier dargelegten Zusammenhängen Rechnung trägt.

Eine gemäß einem besonderen Aspekt der vorliegenden Erfindung besonders vorteilhafte Ausführungsform des Verfahrens ist dadurch gegeben, daß der der Kühleinrichtung zugeführte Dampf mit dem Kühlfluid in Kontakt tritt. Dadurch wird ein besonders rascher Wärmeübergang und ein rasches Kondensieren des Naßdampfes möglich. Zudem kann auf vorteilhafte Weise auf eine separate Ableitung des in der Kühleinrichtung gebildeten Kondensates verzichtet werden. Ferner wird es möglich, auf eine separate Erfassung der Ablauftemperatur des Kondensates zu verzichten.

Zum Mischen des der Kühleinrichtung zuströmenden Dampfes mit dem der Kühleinrichtung zugeführten Kühlfluid ist im Inneren der Kühleinrichtung in vorteilhafter Weise eine Kühlstrecke ausgebildet, innerhalb welcher sich der zuströmende Naßdampf abkühlt, wobei der sich abkühlende Dampf permanent durch den Druck des Dampfsystems zu der Kühlstrecke hin vorgetrieben wird, vollständig kondensiert und das entstehende Kondensat sich in das Kühlfluid mischt. Unmittelbar im Anschluß an den Mischbereich wird die Temperatur der Fluidmischung aus Kühlfluid und Kondensat erfaßt. Dadurch wird es auf vorteilhafte Weise möglich, die Auswirkungen etwaiger Wärmeverluste nach der Kühleinrichtung auf die Bestimmung der Dampfnässe zu verringern.

Eine unter labortechnischen Gesichtspunkten besonders günstig durchführbare Ausführungsform des Verfahrens ist dadurch gegeben, daß das Kühlfluid durch einen Kühlkreislauf zirkuliert, der die Kühleinrichtung und eine Wärmetauscheinrichtung umfaßt, wobei die Wärmetauscheinrichtung das Kühlfluid auf die genannte Eingangstemperatur abkühlt. Dadurch wird es auf vorteilhafte Weise möglich, auf eine permanente Kühlfluidzufuhr von außen sowie auf eine permanente Abfuhr dieses Kühlfluides zu verzichten. Dieser Kühlkreislauf ist, abgesehen von dem in der Kühleinrichtung ggf. vorgesehenen Mischbereich, ein an sich geschlossener Kühlkreislauf, in dem ein vorbestimmtes Kühlfluidvolumen aufgenommen ist.

Für die Ausführungsform des Verfahrens, bei der eine Untermischung des Naßdampfkondensates unter das Kühlfluid vorgesehen ist, wird aus dem Kühlkreislauf in vorteilhafter Weise permanent Fluid abgezweigt. Der Massenstrom des permanent aus dem Kühlkreislauf abgezweigten Fluides entspricht im wesentlichen dem zur gleichen Zeit sich in das Kühlfluid untermischenden Kondensatmassenstrom. Dieser Kondensatmassenstrom wird in vorteilhafter Weise im wesentlichen konstant gehalten. Dies wird auf vorteilhafte Weise dadurch erreicht, daß der aus dem Kühlkreislauf abgezweigte Fluidstrom konstant gehalten wird. Auf vorteilhafte Weise wird es dadurch möglich, indirekt den Massenstrom des der Kühleinrichtung zuströmenden Dampfes zu steuern, da bei ungenügendem Abzug von Fluid aus dem Kühlkreislauf der in der Kühleinrichtung gebildete Mischbereich "überläuft", wodurch sich die zur Abkühlung des zuströmenden Dampfes wirksame Kühlfläche verringert und zwangsläufig weniger Kondensat gebildet wird. Die Menge des aus dem Kühlkreislauf abgezogenen Fluides muß nicht permanent konstant gehalten werden, sondern kann insbesondere durch eine Recheneinrichtung nach Maßgabe einer vorgegebenen Regelstrategie eingeregelt werden.

Das aus dem Kühlkreislauf abgezogene Fluid oder das sich in der Kühleinrichtung bildende Kondensat wird in vorteilhafter Weise auf seinen Gehalt an nicht-kondensierbaren Gasen hin analysiert. Dadurch wird es insbesondere bei volumetrischer Messung des Kondensat-Massenstromes möglich, etwaige, durch Gaseinschlüsse hervorgerufene Meßfehler bei der Bestimmung des Massenstromes auszuschalten. In vorteilhafter Weise ist eine Entlüftungseinrichtung vorgesehen, durch welche etwaige nicht-kondensierbare Gase abgezweigt werden können. Diese Entlüftungseinrichtung ist in vorteilhafter Weise in Kühlfluid-Strömungsrichtung der Kühleinrichtung abfolgend angeordnet.

Die Analyse des abgezweigten Fluides oder des gebildeten Kondensates hinsichtlich etwaiger darin enthaltener Anteile nicht-kondensierbarer Gase erfolgt in vorteilhafter Weise unter Verwendung eines Kapilarrohres. In diesem Kapilarrohr bilden die ggf. mit dem Naßdampf mitgeführten, nicht kondensierbaren Gase, Gasblasenabschnitte, wobei die Länge dieser Gasblasenabschnitte direkt proportional zum Volumen der jeweiligen Gasblasenabschnitte ist.

Eine im Hinblick auf eine besonders genaue Messung der Dampfnässe vorteilhafte Ausführungsform des Verfahrens ist dadurch gegeben, daß der zur Bestimmung der Dampfnässe abgezweigte Teil des Naßdampfes über eine wärmeisolierte Leitungeinrichtung abgezweigt wird. Dadurch wird eine etwaige Verfälschung der Meßergebnisse durch einen bereits vor der Kühleinrichtung stattfindenden Wärmeaustausch mit der Umgebung weitgehend verhindert.

Gemäß einem besonderen Aspekt der vorliegenden Erfindung wird der zur Bestimmung der Dampfnässe abgezweigte Teil des Naßdampfes über eine Leitungseinrichtung abgezweigt, die durch den Naßdampf selbst außenseitig beheizt ist. Dadurch wird es auf vorteilhafte Weise möglich, die Außenseite der zur Zufuhr des Naßdampfes vorgesehenen Leitung exakt auf die Temperatur des Naßdampfes aufzuheizen, so daß zwischen dem Leitungsinneren und dem Leitungsäußeren keine Temperaturdifferenz vorliegt und kein Wärmeaustausch zwischen dem Medium im Inneren der Leitungseinrichtung und dem die Leitungseinrichtung umgebenden Medium stattfindet. Der Durchmesser der Leitungseinrichtung beträgt vorzugsweise weniger als 3 mm. Die Leitungseinrichtung ist in vorteilhafter Weise aus einem Kunststoffmaterial gefertigt.

Der über die Leitungseinrichtung abgezweigte Dampf strömt aufgrund eines zwischen der Abzweigstelle und der Kühleinrichtung bestehenden extrem geringen Druckgefälles zu der Kühleinrichtung.

Der Leitungsquerschnitt der Leitungseinrichtung ist derart bemessen, daß der abgezweigte Dampf im wesentlichen ungedrosselt in die Kühleinrichtung eintritt. In vorteilhafter Weise wird die Gesamtlänge der Leitungseinrichtung möglichst kurz gehalten.

Der Druck des Kühlfluides in der Kühleinrichtung ist bei einer Ausführungsform des Verfahrens, bei welchem eine Mischung des Kühlfluides und des Naßdampf-Kondensates erfolgt, im wesentlichen gleich dem Druck des durch die Leitungseinrichtung zuströmenden Naßdampfes.

Die Bestimmung des Momentan-Wertes der Dampfnässe erfolgt in vorteilhafter Weise in Verbindung mit einer programmierten Rechnereinrichtung, wobei die Rechnereinrichtung den Momentanwert der Dampfnässe auf Grundlage des momentanen Kondensat-Massenstromes, der momentanen Heizleistung sowie der momentanen Temperatur und/oder dem momentanen Druck des Naßdampfes errechnet. Der zur Berechnung der momentanen Dampfnässe durch die Rechnereinrichtung abgearbeitete Rechenalgorhithmus beinhaltet neben den zur Bestimmung der Dampfnässe erforderlichen Rechenoperationen nach Maßgabe des h-s-Diagrammes nach Mollier in vorteilhafter Weise zusätzliche Korrektur-Terme, die die Wärmekapazität des Meßsystemes und die Druck- und Temperaturabhängigkeit der Dissipationsverluste berücksichtigen.

Durch eine effektive Isolierung der Kühleinrichtung kann die Heizleistung des der Kühleinrichtung zuströmenden Dampfes mit hoher Genauigkeit erfaßt werden. Der ggf. durch die Kühleinrichtung abgegebene Verlustwärmestrom kann durch einen entsprechenden Korrekturterm, der beispielsweise die Ausgangs-temperatur der Kühleinrichtung und die Umgebungstemperatur berücksichtigt, weitgehend kompensiert werden.

Für den Fall, daß der der Kühleinrichtung zuströmende Naßdampf sich in der Kühleinrichtung mit dem Kühlfluid mischt und die Heizleistung des Naßdampfes auf Grundlage des durch die Kühleinrichtung strömenden Kühlfluidstromes und der Erwärmung des Kühlfluides gemessen wird, kann der Dampfgehalt X auf Grundlage der folgenden Gleichung bestimmt werden:

$$X = \left( \frac{c_{p.Mw} \cdot T_{Mw}(\dot{m}_{Kw} + \dot{m}_d) - c_{p.Kw} \cdot \dot{m}_{Kw}(T_{Mw} - \Delta T) + \dot{Q}_{Verl.}}{\dot{m}_d} - h'_d \right) \cdot \frac{1}{h''_d - h'_d}$$

wobei:

| | |
|---|---|
| $c_{pMw}$ | spez. Wärmekapazität des Mischwassers |
| $c_{pKw}$ | spez. Wärmekapazität des (kalten) Kühlwassers |
| $m_{Mw}$ | Massenstrom des Mischwassers = $(m_d + m_{Kw})$ |
| $m_{Kw}$ | Massenstrom des Kühlwassers |
| $h''_d$ | Enthalpie des trockenen gesättigten Dampfes |
| $h'_d$ | Enthalpie der siedenden Flüssigkeit |
| $Q_{verl.}$ | Wärmestrom aus dem Kondensator durch Isolationsverluste |
| $\Delta T$ | Temperaturdifferenz $T_{mw} - T_{Kw}$ |
| $m_d$ | Massenstrom des Dampfes |

Die zur Bestimmung des Dampfgehaltes X erforderlichen Werte $h_d''$ sowie $h_d'$ sind jeweils eindeutig bestimmten Druck- oder Temperaturwerten zugeordnet und können beispielsweise iterativ aus Näherungsgleichungen oder entsprechenden, vorzugsweise abgespeicherten Kennfeldern entnommen werden.

Obgleich die zur Bestimmung der spezifischen Enthalpien h'' und h' erforderlichen Druck- oder Temperaturwerte auf einfache Weise durch eine Druck- oder Temperaturmeßeinrichtung ermittelt werden können, ist es auch möglich, auf eine gesonderte Erfassung des Druckes des Naßdampfes zu verzichten, wobei der Druck indirekt auf Grundlage des aus dem Kühlkreislauf abgezweigten Massenstrom und dem Strömungswiderstand einer den Abzweigmassenstrom begrenzenden Drosselstelle errechnet werden kann.

Hinsichtlich einer Vorrichtung zur Bestimmung der Dampfnässe von Naßdampf wird die eingangs genannte Aufgabe erfindungsgemäß gelöst durch eine Vorrichtung mit einer Naßdampfzufuhr-einrichtung, einer Kühleinrichtung zum Kondensieren einer durch die Naßdampfzufuhreinrichtung zugeführten Naßdampfmenge, einer Kondensatableitungseinrichtung zum Ableiten des Kondensates aus der Kühleinrichtung, einer Kondensatmengen-Erfassungseinrichtung zum Erfassen des Massenstromes des sich bildenden Kondensates, einer Heizleistungserfassungseinrichtung zur Erfassung der Heizleistung des der Kühleinrichtung zugeführten Naßdampfes und einer Rechnereinrichtung zur Berechnung des Momentanwertes der Dampfnässe nach Maßgabe des Kondensat-Massenstromes und der Heizleistung des sich in der Kühleinrichtung niederschlagenden Naßdampfes.

Die erfindungsgemäße Vorrichtung ist kleinbauend herstellbar und ermöglicht eine kontinuierliche Analyse des kalorischen Zustandes von Dampf, wobei der kalorische Zustand des Dampfes unter Abzweigung vergleichsweise geringer Teildampfmengen ermittelt werden kann.

In vorteilhafter Weise ist die Kühleinrichtung mit einer Wärmedämmeinrichtung umgeben, zur Unterdrückung eines Wärmeüberganges zwischen der Kühleinrichtung und der Umgebung. Dadurch wird auf vorteilhafte Weise sichergestellt, daß die der Kühleinrichtung zugeführte Heizleistung durch Messung der Erwärmung des Kühlwassers präzise erfaßt werden kann.

Die Heizleistungserfassungseinrichtung umfaßt in vorteilhafter Weise eine erste Temperaturmeßstelle zur Erfassung der Kühlfluideingangstemperatur und eine zweite Temperaturmeßstelle zur Erfassung einer Kühlfluidausgangstemperatur. Anhand der Erwärmung des Kühlfluides kann in Verbindung mit dem Massenstrom des Kühlfluides die der Kühleinrichtung zugeführte Heizleistung präzise erfaßt werden.

Eine besonders präzise Erfassung der Heizleistung wird in vorteilhafter Weise dadurch möglich, daß die zweite Temperaturmeßstelle innerhalb der die Kühleinrichtung umgebenden Wärmedämmungseinrichtung angeordnet ist. Dadurch wird es auf vorteilhafte Weise möglich, den Einfluß etwaiger Wärmeverluste in dem Leitungssystem bis zu der genannten zweiten Temperaturmeßstelle nahezu vollständig zu unterdrücken.

Eine insbesondere im Hinblick auf eine permanente Überwachung der Dampfnässe vorteilhafte Ausführungsform der Vorrichtung ist dadurch gegeben, daß die Kühleinrichtung in eine Kühlfluidkreislaufanordnung eingebunden ist, wobei das Kühlfluid durch die Kühlfluid-Kreislaufanordnung zirkuliert. Dadurch ist es möglich, die Vorrichtung unabhängig von einer separaten Kühlfluid- insbesondere Kaltwasserquelle zu betreiben. In weiterhin vorteilhafter Weise wird dadurch ermöglicht, daß aus der Vorrichtung lediglich das im Rahmen des Meßbetriebes anfallende Kondensat abgeführt werden muß.

Das Leitungssystem dieser Kreislaufanordnung ist in vorteilhafter Weise derart ausgebildet, daß das Kühlfluid sich bis zum Eintritt in die Kühleinrichtung ausreichend abgekühlt hat. Um eine besonders effektive Abkühlung des Kühlfluides zu ermöglichen, ist in die Kühlfluid-Kreislaufanordnung in vorteilhafter Weise eine Wärmetauscheinrichtung eingefügt. Diese Wärmetauscheinrichtung ermöglicht eine effektive Abfuhr der dem Kühlfluid in der Kühleinrichtung zugeführten Wärme. Der Wärmetauscher umfaßt in vorteilhafter Weise eine Gebläseeinrichtung zur Abkühlung des Kühlfluides durch die Umgebungsluft. Alternativ dazu oder auch in Kombination mit dieser Gebläseeinrichtung ist es auch möglich, den Wärmetauscher mit einer externen Fluidquelle zu verbinden. Bei einer Ausführungsform des Wärmetauschers als Fluidwärmetauscher kann ein Kühlwassereingang beispielsweise im unteren Bereich eines großvolumigen Gefäßes und der Kühlwasserausgang des Wärmetauschers an den oberen Bereich des Gefäßes angeschlossen werden. Durch die Einbindung eines Wärmetauschers in die Kühlfluid-Kreislaufanordnung wird es auf vorteilhafte Weise möglich, das Volumen des in der Kühlfluid-Kreislaufanordnung aufgenommenen Fluides gering zu halten, wodurch sich eine besonders hohe Steifigkeit der Kühlfluidkreislaufanordnung hinsichtlich druckschwankungsbedingter Volumenänderungen ergibt.

Die in der Kühlfluid-Kreislaufanordnung aufgenommene Kühlfluidmenge wird in vorteilhafter Weise durch eine Pumpeneinrichtung umgewälzt. Durch Steuerung der Pumpenleistung bzw. Drehzahl kann hierbei auf vorteilhafte Weise der Massenstrom des durch die Kühleinrichtung strömenden Kühlfluides präzise eingestellt werden. Eine besonders präzise Einstellung des durch die Kühleinrichtung strömenden Kühlfluid-Massenstroms kann durch eine der Pumpeneinrichtung nachgeschaltete Drosseleinrichtung erreicht werden. Durch die Verwendung der Pumpeneinrichtung und eine dieser nachgeschaltete Drosseleinrichtung wird es möglich, das Druckgefälle des Kühlfluides in der Kühleinrichtung auf einem geringen Wert zu halten.

In vorteilhafter Weise ist eine Kühlfluidmassenstromerfassungseinrichtung vorgesehen zur Erfassung des der Kühleinrichtung zugeführten Kühlfluid-Massenstromes. Diese Kühlfluidmassenstromerfassungseinrichtung kann beispielsweise durch eine Blendeneinrichtung und eine der Blendeneinrichtung vorgeschaltete Druckerfassungseinrichtung oder beispielsweise auch durch eine volumetrische oder auch hydrodynamische Massen- oder Volumenstromerfassungseinrichtung gebildet sein. In vorteilhafter Weise ist die Kühlfluidmassenstromerfassungseinrichtung in die Pumpeneinrichtung integriert. Die Pumpeneinrichtung kann dabei beispielsweise als Zahnradpumpe oder als Piezo-Pumpe ausgebildet sein. Die Ausbildung der Pumpeneinrichtung als Dosierpumpe macht es möglich, auf eine Messung des Kühlfluidstromes zu verzichten und die durch die Dosierpumpe, beispielsweise auf einen bestimmten Wert festgelegten Volumenstrom durch die Rechnereinrichtung zu berücksichtigen.

Eine im Hinblick auf eine besonders günstige Erfassung der Heizleistung des Naßdampfes vorteilhafte Ausführungsform der Erfindung ist dadurch gegeben, daß in der Kühleinrichtung ein Mischbereich vorgesehen ist, und daß der Naßdampf oder dessen Kondensat in dem Mischbereich mit dem Kühlfluid in Kontakt tritt, wobei die Kühleinrichtung einen Abfluß-Fluidweg aufweist zum Ableiten des Kühlfluides gemeinsam mit dem untergemischten Kondensat. Dadurch wird es auf besonders vorteilhafte Weise möglich, die aus der Kühleinrichtung abgeführte Wärmemenge mittels einer einzigen Temperaturerfassungseinrichtung zu messen. Ferner ist auf vorteilhafte Weise sichergestellt, daß der in der Kühleinrichtung kondensierte Naßdampf und das Kühlfluid die gleiche Temperatur aufweisen. Des weiteren wird es auf besonders vorteilhafte Weise möglich, den Massenstrom des sich in der Kühleinrichtung bildenden Kondensates zu messen.

Um das Volumen der in der Kühlfluidkreislaufanordnung aufgenommenen Kühlflüssigkeit konstant zu halten, ist in vorteilhafter Weise eine Abzweigeinrichtung vorgesehen zum Abzweigen von Kühlfluid oder einer Mischung von Kühlfluid und Kondensat aus der Kühlfluidkreislaufanordnung. In vorteilhafter Weise ist die Kondensatmengen-Erfassungseinrichtung an die Abzweigeinrichtung angeschlossen zur Erfassung des aus dem Kühlfluid-Kreislauf abgezweigten Massenstromes.

Die Erfassung der Erwärmung des Kühlfluides erfolgt in vorteilhafter Weise mittels einer Sensoreinrichtung, deren Meßsignal bedarfsweise einer Analog/Digital Wandlereinrichtung zugeführt und in ein von der Rechnereinrichtung lesbares Signal umgewandelt wird. Auch die Eingangstemperatur des Kühlfluides wird über eine Sensoreinrichtung erfaßt und bedarfsweise unter Zwischenschaltung einer Analog/Digital Wandler-einrichtung der genannten Rechnereinrichtung zugeführt.

Die genannte Rechnereinrichtung verarbeitet ferner ein für den Kondensatmassenstrom repräsentatives Signal. Dieses Sig-nal kann bedarfsweise ebenfalls unter Zwischenschaltung einer Analog/Digial Wandlereinrichtung erzeugt werden. Der Kondensatmassenstrom kann auch dadurch erfaßt werden, daß das Kondensat mittels einer Pumpeinrichtung gefördert wird, wobei der Kondensatmassenstrom durch eine Steuereinrichtung vorgegeben wird, und der momentan vorgegebene Kondensatmassenstrom der durch die Rechnereinrichtung durchgeführten Berechnung zugrundegelegt wird.

In vorteilhafter Weise ist es auch möglich, den Kondensatmassenstrom durch eine Einstellvorrichtung einzustellen. Eine derartige Einstellvorrichtung kann beispielsweise durch ein stufenlos einstellbares Drosselventil gebildet sein. Der jeweils gewünschte Kondensatmassenstrom bzw. der jeweils gewünschte, insbesondere günstigste Massenstrom einer Kondensat/Kühlfluidmischung wird in vorteilhafter Weise auf Grundlage einer vorbestimmten Regelstrategie durch die Rechnereinrichtung ermittelt und automatisch eingeregelt.

Die Rechnereinrichtung umfaßt in vorteilhafter Weise eine Speichereinrichtung, in der ein Datensatz abgespeichert ist, aus dem zu einem vorbestimmten Druck oder Temperaturwert die Enthalpien h' und h" abgelesen werden können. In vorteilhafter Weise ist eine weitere Speichereinrichtung vorgesehen, in der die über eine bestimmte Zeitdauer hinweg gemessenen Meßwerte und insbesondere der daraus errechnete Wert für den Dampfgehalt bzw. die errechnete Dampfnässe abgespeichert werden.

Der Rechenalgorithmus der Recheneinrichtung kann bedarfsweise geändert werden. Die Rechnereinrichtung ist hierzu in vorteilhafter Weise mit einer Schnittstelle versehen.

Über diese Schnittstelle kann die Rechnereinrichtung mit einer extemen Eingabevorrichtung oder beispielsweise auch mit einem externen Rechnersystem verbunden werden. Für den Fall, daß die Rechnereinrichtung einen Dampfgehalt von 100 % oder mehr ermittelt, wird in vorteilhafter Weise die momentane Überhitzungstemperatur des Dampfes angezeigt. In vorteilhafter Weise ist die Anzeigefläche als Flach-Bildschirm, insbesondere als LCD-Bildschirm, ausgebildet, und die Rechnereinrichtung derart programmiert, daß diese das momentane Dampfzustandumgebungsfeld in dem h-s-Diagramm darstellt, wobei der momentane Dampfzustands-Punkt in diesem graphisch dargestellten h-s-Diagramm kontinuierlich angezeigt wird.

In vorteilhafter Weise ist es auch möglich, die Vorrichtung insbesondere über die genannte Schnittstelle in ein Steuerungs- oder Überwachungssystem einzubinden, wodurch es möglich wird, beispielsweise die Heizleistung einer Dampferzeugungseinrichtung im Hinblick auf eine gewünschte Dampfnässe zu steuern.

Die Erfindung wird nachfolgend anhand von Ausführungsbeispielen und zugehörigen Zeichnungen näher erläutert. In diesen zeigen:

Fig.1     eine perspektivische Ansicht einer Vorrichtung zur Messung der Dampfnässe nach der Erfindung,

Fig.2     eine Prinzip-Skizze zur Erläuterung des Aufbaus einer bevorzugten Ausführungsform einer Meßanordnung nach der Erfindung,

Fig.3     eine Längsschnittansicht durch ein isoliertes Rohrleitungsstück mit diesem unmittelbar benachbart angeordneter Kühleinrichtung,

Fig.4     eine vereinfachte Längsschnittansicht durch eine Dampfabzweigeinrichtung mit integrierter Kühleinrichtung,

Fig.5     eine vereinfachte Darstellung eines Ausschnitts aus einer Meßschaltungsanordnung gemäß einer weiteren Ausführungsform der Erfindung mit separater Kondensatmengenerfassung,

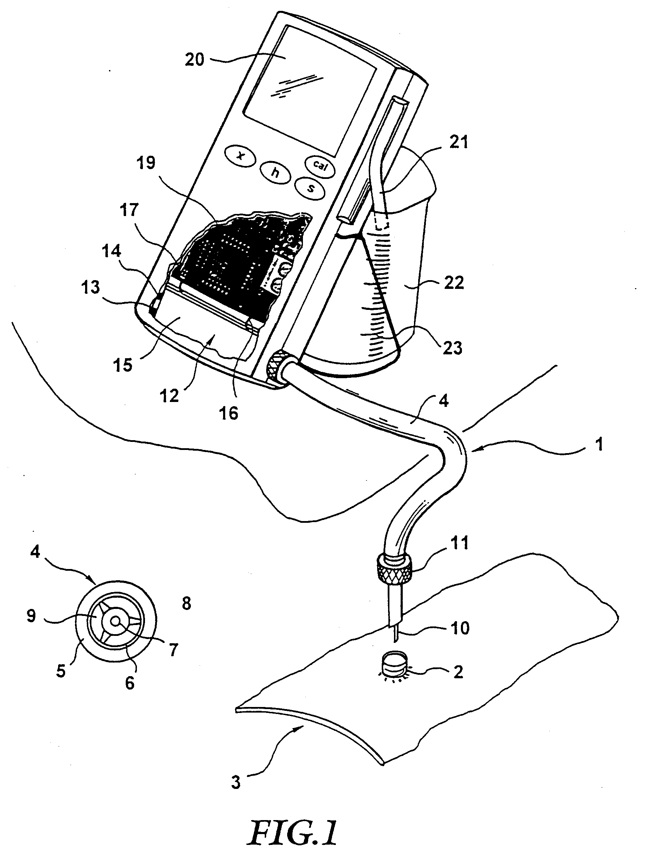

Fig.1 zeigt eine in ein tragbares Handgerät integrierte Vorrichtung zur Erfassung der Dampfnässe von Sattdampf. Die Vorrichtung ist über eine Naßdampfzufuhreinrichtung 1 an einen Gewindestutzen einer Dampfleitung 3 anschließbar. Die Naßdampfzufuhreinrichtung 1 ist hier als elastische Schlauchleitung 4 ausgebildet. Die elastische Schlauchleitung 4 umfaßt einen Isolationsmantel 5 und einen darin aufgenommenen Druckschlauch 6. Koaxial im Inneren des Druckschlauches 6 ist eine Dampfleitung 7 aufgenommen, die über Abstandshalter 8 in der Dampfleitung 7 abgestützt ist. Zwischen der Dampfleitung 7 und dem Druckschlauch 6 ist ein Zwischenraum 9 definiert, der mit der Dampfatmosphäre im Inneren der Dampfleitung 3 permanent in Verbindung steht.

Die Dampfleitung 7 mündet mit ihrem einen Ende in ein Sondenrohr 10, das in Meßstellung in die Dampfleitung 3 hineinragt. Die Schlauchleitung 4 weist an ihrem einen Ende eine Gewindemuffe 11 auf, mittels welcher die Schlauchleitung in abdichtender Weise an dem Gewindestutzen 2 anbringbar ist.

Die Naßdampfzufuhreinrichtung 1 ist an ihrem der Dampfleitung 3 abgewandten Ende unmittelbar an eine Kühleinrichtung 12 angeschlossen. Im Inneren der Kühleinrichtung 12 wird der über die Naßdampfzufuhreinrichtung 1 zugeführte Naßdampf abgekühlt und kondensiert. Die Kühleinrichtung 12 ist über eine Kühlfluidzufuhrleitung 13 und über eine Kühlfluidabflußleitung 14 in einen in dem Handgerät ausgebildeten Kühlkreislauf integriert. Die Kühleinrichtung 12 ist in einen Isolierstoffkörper 15 eingebettet, der einen unmittelbaren Wärmeaustausch zwischen der Kühleinrichtung 12 und der Umgebung verhindert. Aus diesem Isolierstoffkörper 15 ist eine Kühlwassereingangs-temperaturmeßleitung 16 und eine Kühlwasserausgangstemperaturmeßleitung 17 herausgeführt. Sowohl die Eingangstemperaturmeßleitung 16 als auch die Ausgangstemperaturmeßleitung 17 umfassen jeweils zwei Leitungsdrähte, die im Inneren der Kühleinrichtung 12 jeweils an ein Thermoelement angeschlossen sind. Jedes Thermoelement (hier nicht dargestellt) wird unmittelbar von dem Kühlfluid umspült. Die Eingangstemperaturmeßleitung 16 und die Ausgangstemperaturmeßleitung 17 sind an eine elektronische Meßschaltung angeschlossen.

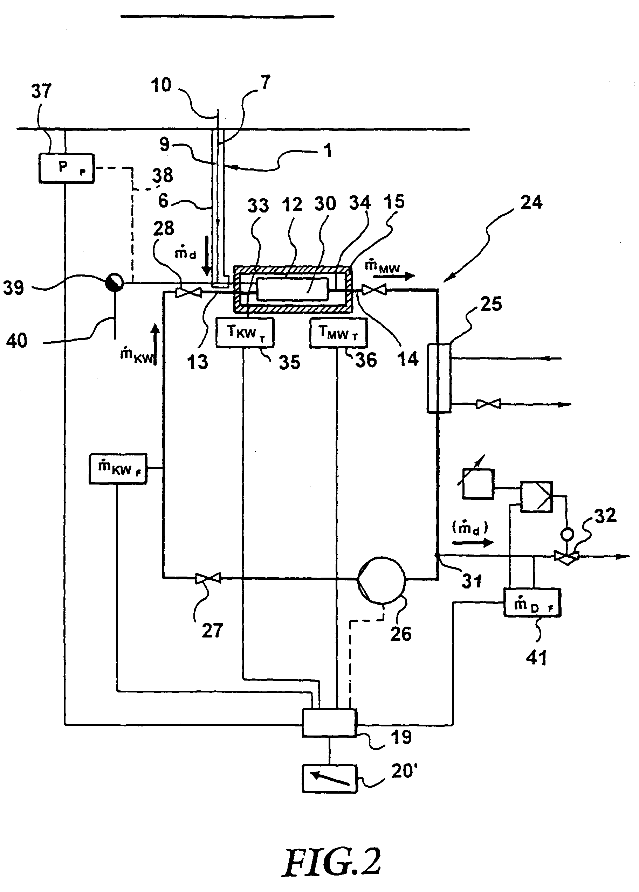

Die über die Meßleitungen 16 und 17 erfaßten analogen Meßwerte der Thermoelemente werden durch jeweils einen in die elektronische Meßschaltung integrierten A/D-Wandler von einer Rechnereinrichtung 19 erfaßt. Im Inneren des Handgerätes ist eine nachfolgend in Verbindung mit Fig.2 noch näher beschriebene Einrichtung zur Erfassung des momentan aus der Kühleinrichtung 12 abgeführten Massenstromes, angeordnet. Des weiteren ist im Inneren des Meßgerätes eine Einrichtung zur Erfassung des durch die Kühleinrichtung 12 geförderten Kühlfluidmassenstromes vorgesehen. Auf Grundlage des erfaßten Kühlfluidmassenstromes, des erfaßten momentanen Kondensatmassenstromes sowie der über die Meßleitungen 16 und 17 gemessenen Kühlfluideintrittstemperaturen bzw. Kühlfluidaustrittstemperatur wird in Verbindung mit einem in einer der Rechnereinrichtung zugeordneten Speichereinrichtung gespeicherten Kennfeld der Momentanwert der Dampfnässe errechnet. Dieser Momentanwert der Dampfnässe wird über eine LCD-Anzeigefläche 20 angezeigt. Ferner wird der zeitliche Verlauf der Dampfnässe erfaßt und gespeichert. Der zeitliche Verlauf sämtlicher durch die Rechnereinrichtung verarbeiteter Meßgrößen kann ebenfalls auf der LCD-Anzeigefläche 20 dargestellt werden.

Das sich ständig in der Kühleinrichtung 12 niederschlagende Kondensat wird über eine Abzweigeinrichtung aus dem in das Handgerät integrierten Kühlfluidkreis abgezweigt und über eine Ablaßleitung 21 aus dem Handgerät herausgeführt. Die Ablaßleitung 21 ist als elastischer Schlauch ausgebildet und mündet in ein dem Handgerät benachbart aufgestelltes Auffanggefäß 22. Das hier dargestellte Auffanggefäß hat ein Fassungsvolumen von vorzugsweise 0,5 Liter. Das Auffanggefäß 22 ist mit einer Meßskala 23 versehen zum Ablesen des in dem Auffanggefäß aufgefangenen Kondensatvolumens. Die Rechnereinrichtung des hier dargestellten Handgerätes ermittelt auf Grundlage des permanent erfaßten momentanen Kondensat-Massenstromes durch Integralbildung die Gesamtmenge an abgeführtem Kondensat. Anhand des in dem Auffanggefäß aufgefangenen Kondensatvolumens und des durch die Rechnereinrichtung ermittelten Integralwertes kann auf einfache Weise die Richtigkeit bzw. die Genauigkeit der Massenstromerfassung überprüft werden.

Die bei dem vorangehend beschriebenen Handgerät verwendete Meß-Schaltung entspricht in ihrem Aufbau im wesentlichen der in Figur 2 vereinfacht dargestellten Meß-Schaltung.

Gemäß Fig.2 ist die Kühleinrichtung 12 vollständig von dem Isolierstoffkörper 15 umgeben. Die Kühleinrichtung 12 ist über die Kühlfluidzufuhrleitung 13 und die Kühlfluidabflußleitung 14 in eine Kühlfluidkreislaufanordnung 24 eingebunden.

In die Kühlfluidkreislaufanordnung 24 ist in vorteilhafter Weise ferner eine Wärmetauschereinrichtung 25 eingebunden, die beispielsweise eine Gebläseeinrichtung umfaßt oder, wie hier dargestellt, hermetisch getrennt an einen Fremdkühlmittelkreislauf angeschlossen ist. Die durch die Wärmetauscheinrichtung 25 abgeführte Warmemenge ist in vorteilhafter Weise stufenlos regelbar. Zur stufenlosen Regelung der Wärmeabfuhr der Wärmetauschervorrichtung 25 kann beispielsweise der Luftdurchsatz einer Gebläseeinrichtung oder die Fluidmenge eines durch die Wärmetauschervorrichtung 25 zirkulierenden Fremdfluides geregelt werden. Die Regelung der Kühlleistung der Wärmetauschervorrichtung 25 erfolgt in vorteilhafter Weise mittels eines rechnergesteuerten Regelorganes.

Zur Umwälzung des in der Kühlfluidkreislaufanordnung 24 aufgenommenen Kühlfluides ist eine Umwälzpumpe 26 vorgesehen. Die Umwälzpumpe 26 kann als hydrostatische bder auch als hydrodynamisch fördernde Pumpe ausgebildet sein. Das Verhältnis des durch die Kühlkreislaufanordnung 24 geförderten Kühlfluidstromes zu dem in der Kühleinrichtung 12 niedergeschlagenen Kondensatstrom liegt in vorteilhafter Weise im Bereich von 15 : 1.

Die Kühlkreislaufanordnung 24 umfaßt ferner eine der Umwälzpumpe 26 in Strömungsrichtung abfolgend angeordnete erste Drosseleinrichtung 27, deren Strömungswiderstand stufenlos einstellbar ist. Eine zweite Drosseleinrichtung 28 ist unmittelbar im Eintrittsbereich der Kühleinrichtung 12 vorgesehen zur nochmaligen Drosselung des der Kühleinrichtung 12 zugeführten Kühlfluidstromes. Zwischen der ersten Drosseleinrichtung 27 und der zweiten Drosseleinrichtung 28 ist eine Kühlfluidmassenstromerfassungseinrichtung 29 vorgesehen zur Erfassung des der Kühleinrichtung 12 zugeführten Kühlfluidmassenstromes.

In der Kühleinrichtung 12 ist eine Mischkammer 30 gebildet, in welcher der über die Naßdampfzufuhreinrichtung 1 der Kühl-einrichtung 12 zugeführte Dampf mit dem durch die Kühlfluidkreislaufanordnung 24 zirkulierenden Kühlfluid in Kontakt tritt. Der mit dem Kühlfluid in der Mischkammer 30 in Kontakt tretende Dampf wird durch das Kühlfluid abgekühlt und kondensiert. Das sich bildende Kondensat mischt sich unter das kontinuierlich durch die Mischkammer 30 geförderte Kühlfluid und wird über die Kühlfluidabflußleitung 14 aus der Kühleinrichtung 12 abgeführt. Aus der Kühlfluidkreislaufanordnung 24 wird permanent über eine Fluidabzweigstelle Fluid abgezweigt. Der Massenstrom an abgezweigtem Fluid entspricht im wesentlichen dem sich in der Kühleinrichtung 12 niederschlagenden Kondensat-Massenstrom. Der über die Fluidabzweigstelle abgezweigte Fluidmassenstrom wird mittels einer Stellventileinrichtung 32 geregelt. Die Regelung der Stellventileinrichtung 32 erfolgt in vorteilhafter Weise durch die zur Berechnung der Dampfnässe vorgesehene Rechnereinrichtung 19. Die Regelstrategie zur Regelung des aus der Kühlfluidkreislaufanordnung abgezogenen Fluidmassenstromes berücksichtigt dabei in vorteilhafter Weise die am Eingang der Kühleinrichtung 12 durch einen Eingangstemperatursensor 33 und am Ausgang der Kühleinrichtung 12 durch einen Ausgangstemperatursensor 34 erfaßte Temperaturdifferenz. Im Falle kleiner Temperaturdifferenzen wird der aus der Kühlfluidkreislaufanordnung 24 abgezogene Massenstrom erhöht. Dadurch vergrößert sich die in der Mischkammer 30 dem durch die Naßdampfzufuhreinrichtung 1 nachströmenden Dampf zur Abkühlung zur Verfügung stehende Kühlfläche. Der aus der Kühlfluidkreislaufanordnung 24 abgezogene Massenstrom kann auf einen Wert eingestellt werden, bei dem der Ausgangstemperatursensor 34 einen vorgegebenen Temperaturmaximalwert erfaßt. Die Regelung der über die Naßdampfzufuhreinrichtung der Kühleinrichtung zugeführten Dampfmenge bzw. die Regelung der der Kühleinrichtung 12 zugeführten Heizleistung kann alternativ zu einer Regelung des Abzweigmassenstromes auch durch Regelung des durch die Kühlfluidkreislaufanordnung 24 zirkulierenden Kühlfluidmassenstromes erfolgen. Hierzu erfolgt in vorteilhafter Weise eine Steuerung der Förderleistung der Umwälzpumpe 26 oder eine Änderung der Einstellung der ersten oder zweiten Drosseleinrichtungen 27,28, ebenfalls gemäß Vorgabe durch die Rechnereinrichtung 19.

Die durch den Eingangstemperatursensor 33 und den Ausgangs-temperatursensor 34 erfaßten Meßsignale werden der Rechnereinrichtung 19 unter Zwischenschaltung jeweils eines A/D-Wandlers zugeführt. Um eine möglichst präzise Bestimmung der zu dem jeweiligen Dampfdruck korrespondierenden Werte der Sattdampfenthalpie und der Enthalpie der siedenden Flüssigkeit zu ermöglichen, ist gemäß der in Fig.2 dargestellten Schaltung eine Druckerfassungseinrichtung 37 vorgesehen, die den in dem Dampfversorgungssystem herrschenden Dampfdruck erfaßt.

Bei dem vorangehend erläuterten Meßgerät wird der Druck des Dampfversorgungssystems über die Leitung gemessen, die mit dem in Fig.1 dargestellten Zwischenraum 9 in Verbindung steht. Diese Abzweigleitung ist in Fig.2 in Strichlinien dargestellt und durch das Bezugszeichen 38 gekennzeichnet.

Die Naßdampfzufuhreinrichtung 1 gemäß Fig.2 umfaßt ähnlich wie bei dem Ausführungsbeispiel gem. Fig. 1 eine Dampfleitung 7, die unter Bildung eines Zwischenraumes 9 in einem Druckschlauch 6 angeordnet ist. Über eine Ventileinrichtung 39 ist es möglich, in dem Zwischenraum 9 einen vorbestimmten Dampf-strom einzustellen, wobei der durch den Zwischenraum 9 aus dem Dampfsystem abgeführte Dampf über eine Auslaßleitung 40 an die Umgebung abgegeben wird. Der Dampfstrom in dem Zwischenraum 9 wird in vorteilhafter Weise auf einen Wert eingestellt, der ausreicht, um die über den Druckschlauch 6 an die Umgebung abgegebene Wärmemenge zu kompensieren. Durch die so getroffene Anordnung wird auf vorteilhafte Weise verhindert, daß zwischen der Innenwand und der Außenwand der Dampfleitung 7 ein Temperaturgefälle und damit verbunden ein etwaiger Wärmeverlust auftritt.

Bei der hier dargestellten Meßanordnung wird es auf vorteilhafte Weise möglich, den Momentanwert der Dampfnässe bzw. den Momentanwert des Dampfgehaltes des über die Naßdampfzufuhr-einrichtung 1 zuströmenden Naßdampfes zu ermitteln. Die Rechnereinrichtung 19 verarbeitet hierzu eine über den A/D-Wandler 35 erfaßte Kühlwassereingangstemperatur $T_{kw}$, eine über den A/D-Wandler 36 erfaßte Temperatur der Mischung aus Kühlwasser und Kondensat, den durch die Kondensat-Massenstromerfassungseinrichtung 41 erfaßten Kondensatmassenstrom, den über die Kühlfluidmassenstromerfassungseinrichtung 29 erfaßten Kühlfluidmassenstrom sowie den über die Druckerfassungseinrichtung 37 erfaßten Dampfdruck. Basierend auf den durch diese Meßschaltung erfaßten Momentanwerten errechnet die Rechnereinrichtung den Momentanwert der Dampfnässe bzw. des Dampfgehaltes X. Die errechneten Werte sowie ggf. sämtliche durch die genannten Erfassungseinrichtungen erfaßten Meßwerte können über die hier vereinfacht dargestellte Anzeigeeinrichtung 20' dargestellt werden.

Alternativ zu der durch die Druckerfassungseinrichtung 37 vorgenommenen Erfassung des Druckes des (Naß-)Dampfes ist es auch möglich, auf Grundlage der Temperatur des Dampfes die jeweiligen Enthalpiewerte h' und h" zu ermitteln. Ferner ist es auch möglich, die genannten Enthalpiewerte h' und h" anhand des über die Fluidabzweigstelle abgezweigten Massenstromes zu bestimmen, da dieser bei entsprechender Auslegung der Meßanordnung im wesentlichen proportional zu dem Druck des Dampfes in der Dampfleitung 7 ist. Um eine möglichst präzise Messung der Dampfnässe zu ermöglichen, wird die Naßdampfzufuhrleitung 1 in vorteilhafter Weise möglichst kurz ausgebildet.

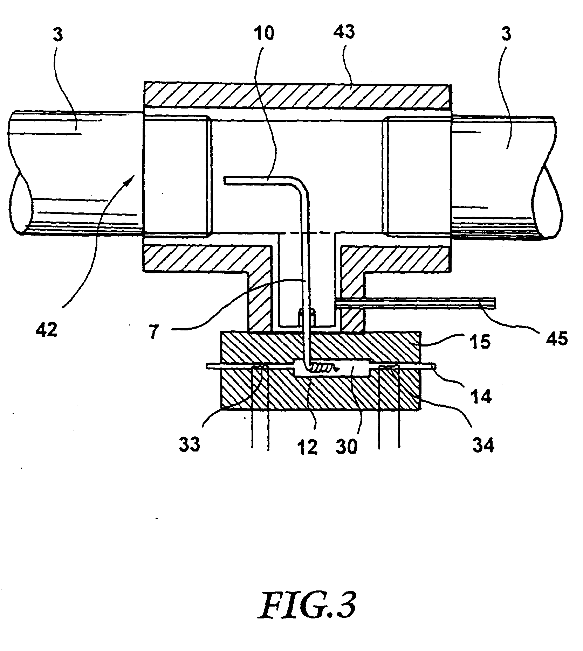

In Fig.3 ist ein Rohrstück dargestellt, das zur Messung der Dampfnässe von Dampf in eine entsprechende Dampfleitung einschraubbar ist. Dieses Rohrstück ist von einem Isolierkörper 43 umgeben. Die zur Erfassung der Heizleistung des durch die Dampfleitung 3 strömenden Dampfes vorgesehene Kühleinrichtung 12 ist dem Rohrstück 42 unmittelbar benachbart angeordnet. Die der Ermittlung der Dampfnässe dienende, aus der Systemdampfleitung 3 abgezweigte Teildampfmenge wird der Kühleinrichtung 12 über die Dampfleitung 7 und das in deren Eintrittsbereich vorgesehene Sondenrohr 10 zugeführt. Die Kühleinrichtung 12 ist ebenfalls in einen Isolierstoffkörper 15 eingebettet. Zur Erfassung der Kühlwassereintrittstemperatur ist unmittelbar im Eingangsbereich der Kühleinrichtung 12 der Eingangstemperatursensor 33 angeordnet. Zur Erfassung der Ausgangstemperatur ist unmittelbar im Anschluß an die Kühleinrichtung 12 der Ausgangstemperatursensor 34 in der Kühlfluidabflußleitung 14 angeordnet. Um ein besonders günstiges Kondensieren des Dampfes in der Mischkammer 30 zu ermöglichen, ist innerhalb der Mischkammer 30 am Ende der Dampfleitung 7 ein bei der hier gezeigten Darstellung mehrfach helixartig gewickelter Endabschnitt ausgebildet, der eine günstige Abkühlung und kavitationsarme Zumischung des Kondensates in die Kühlflüssigkeit ermöglicht.

Um eine etwaige Änderung des kalorischen Zustandes des die Dampfleitung 7 durchströmenden Dampfes zu vermeiden, ist es möglich, eine geringe Dampfmenge über eine Ablaßleitung 45 abzuzweigen. Der Massenstrom des über die Ablaßleitung 45 abströmenden Dampfes kann durch eine hier nicht dargestellte Ventileinrichtung eingestellt werden.

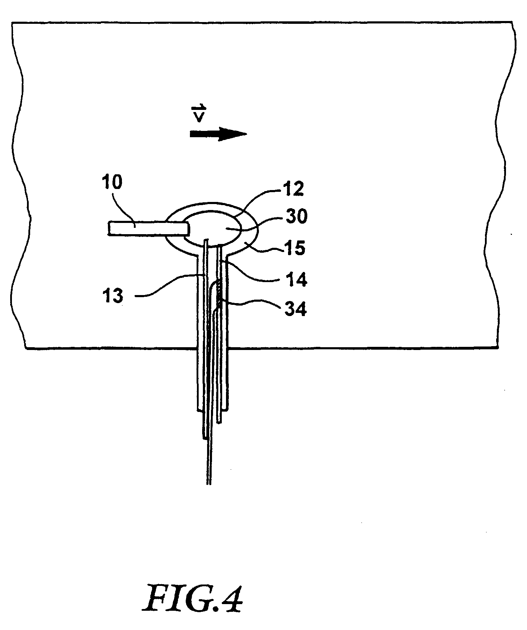

Bei den vorangehend beschriebenen Meßanordnungen ist die Kühleinrichtung 12 außerhalb der zu untersuchenden Dampfatmosphäre angeordnet, wobei die zu analysierende Dampfteilmenge über eine Dampfleitung der außerhalb des Dampfsystems angeordneten Kühleinrichtung zugeführt wird. Alternativ zu diesen Ausführungsformen ist es, wie vereinfacht in Fig.4 dargestellt, auch möglich, die Kühleinrichtung in die zu analysierende Dampfatmosphäre einzubringen.

Bei der gem. Fig.4 dargestellten Meßsondenanordnung ist die Kühleinrichtung 12 in einen zu einem Sondenkopf geformten Isolierstoffkörper 15 eingebettet, aus welchem das Sondenrohr 10 hervorsteht. Im Inneren der Kühleinrichtung 12 ist die Mischkammer 30 gebildet, die mit der Kühlfluidzufuhrleitung 13 und der Kühlfluidabflußleitung 14 in Verbindung steht. In der Kühlfluidabflußleitung 14 ist der Ausgangstemperatursensor 34 angeordnet. Dieser Ausgangstemperatursensor 34 ist über zwei Leitungsdrähte mit der Recheneinrichtung (hier nicht dargestellt) verbunden. Im Inneren der Mischkammer 30 tritt der über das Sondenrohr 10 der Mischkammer zuströmende Dampf mit dem über die Kühlfluidzufuhrleitung 13 zugeführten Kühlfluid in Kontakt und kondensiert. Das Gemisch aus Kondensat und zugeführtem Kühlfluid wird durch die Kühlfluidabflußleitung 14 abgeführt. Obgleich bei der hier dargestellten Ausführungsform die Temperatur des über die Kühlfluidzufuhrleitung 13 zugeführten Kühlfluides durch einen außerhalb der Dampfleitung 3 angeordneten Temperatursensor erfaßt wird, ist es in vorteilhafter Weise auch möglich, diesen Temperatursensor ähnlich wie den hier dargestellten Temperatursensor 34 unmittelbar vor der Mischkammer 30 anzuordnen. Im übrigen ist die hier in einen Meßsondenkopf integrierte Mischkammer 12 in vorteilhafter Weise wie die in Fig.2 dargestellte Mischkammer in eine entsprechende Kühlfluidkreislaufanordnung integriert. Das Sondenrohr 10 ist vorzugsweise aus einem Werkstoff von geringer Wärmeleitfähigkeit, insbesondere einem Keramik-Material gefertigt.

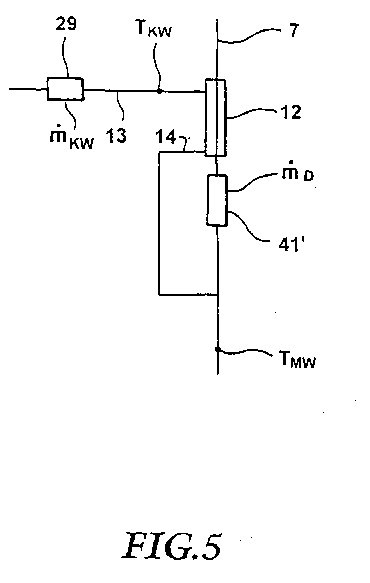

Alternativ zu den vorangehend beschriebenen Ausführungsformen, bei welchen der Massenstrom des sich in der Kühleinrichtung niederschlagenden Kondensates indirekt über den aus der Kühlfluidkreislaufanordnung abgezweigten Massenstrom erfaßt wurde, ist es auch möglich, gemäß der in Fig.5 dargestellten Meßanordnung den Kondensatmassenstrom direkt zu messen, bevor sich das Kondensat unter das Kühlfluid mischt oder abgeleitet wird. Bei dem in Fig.5 dargestellten Ausschnitt einer alternativen Meßanordnung bezeichnet das Bezugszeichen 7 die Dampfzuführleitung, die in vorteilhafter Weise wie in Fig.2 dargestellt, von einer durch den Systemdampf beheizten Kammer umgeben ist. Das Bezugszeichen 13 bezeichnet die Kühlfluidzufuhrleitung, und das Bezugszeichen 14 bezeichnet die Kühlfluidabflußleitung. Der Kondensatmassenstrom $m_D$ wird durch eine Kondensatmassenstromerfassungseinrichtung 41' gemessen. Die Messung des der Kühleinrichtung 12 zufließenden Kühlmittelstromes $m_{Kw}$ erfolgt durch die Kühlfluidmassenstromerfassungseinrichtung 29. Zur Messung der Kühlfluideintritts-Temperatur ist in der Kühlfluidzufuhrleitung 13 der hier nicht dargestellte Eingangstemperatursensor (vgl. Fig.2, Bezugszeichen 33) angeordnet. Die Temperatur der Mischung aus Kühlfluid und Kondensat wird durch den hier ebenfalls nicht dargestellten Ausgangstemperatursensor (vgl. Fig.2, Bezugszeichen 34) erfaßt. Es ist auch möglich, durch zwei separate Temperatursensoren die Kondensat-Temperatur und die Kühlfluidausgangstemperatur zu erfassen.

Eine besonders präzise Erfassung des Kondensatmassenstromes kann in vorteilhafter Weise dadurch erreicht werden, daß die gemäß Fig.5 vorgesehene Kondensatmassenstromerfassungseinrichtung in Kombination mit einer gem. Fig.2 an die Kühlfluidkreislaufanordnung angeschlossenen Kondensatmassenstromerfassungseinrichtung 41 verwendet wird.

Das vorangehend beschriebene Verfahren sowie die vorangehend beschriebene Vorrichtung finden gemäß einem besonderen Aspekt der vorliegenden Erfindung bei einem Dampfsterilisierverfahren Anwendung. Hierbei wird in vorteilhafter Weise im Eintrittsbereich einer Dampfleitung in eine Sterilisierkammer von dieser Dampfleitung oder auch aus der Sterilisierkammer permanent ein geringer Dampfstrom (bspw. 1kg/h) abgezweigt und einer Kühleinrichtung zugeführt, wobei der zugeführte Dampf in der Kühleinrichtung kondensiert. Der sich momentan in der Kühleinrichtung niederschlagende Kondensatmassenstrom sowie die mit dem abgezweigten Dampf mitgeführte Heizleistung werden erfaßt und, basierend auf diesen beiden Meßwerten, der momentane Dampfgehalt bzw. der Momentanwert der Dampfnässe errechnet. Für den Fall, daß die momentane Dampfnässe einen vorgegebenen Grenzwert erreicht, wird ein Warnsignal erzeugt. In vorteilhafter Weise wird der der Sterilisierkammer zuströmende Dampf permanent im Hinblick auf seinen Dampfgehalt bzw. im Hinblick auf seine Dampfnässe überwacht. Die hierbei gewonnenen Meßwerte können mittels einer Schreibeinrichtung aufgezeichnet oder in einer Speichereinrichtung gespeichert und bedarfsweise zu einem späteren Zeitpunkt ausgelesen werden.

Die Erfindung ist nicht auf die vorangehend beschriebenen Ausführungsbeispiele beschränk. Beispielsweise ist es auch möglich, als Kühlfluid ein organisches Fluid, insbesondere Alkohol, zu verwenden, das aufgrund seiner gegenüber Wasser geringeren spezifischen Wärmekapazität eine noch präzisere Erfassung der Heizleistung des abgezweigten Dampfstromes ermöglicht. Ferner ist es auch möglich, dem Kühlfluid einen Zusatzstoff, insbesondere eine Säure oder eine Lauge, zuzumischen und anhand der im Laufe der Zumischung von Kondensat eintretenden Konzentrationsänderung den Kondensatmassenstrom zu erfassen.

**Patentansprüche**

1. Verfahren zur Bestimmung der Dampfnässe von Naßdampf, bei welchem ein Teil des Naßdampfes einer Kühleinrichtung zugeführt und kondensiert wird, und das sich bildende Kondensat aus der Kühleinrichtung abgeführt wird, wobei der Massenstrom des abgeführten Kondensates und die mit dem Naßdampf der Kühleinrichtung zufließende Heizleistung erfaßt werden,
und basierend auf dem Kondensat-Massenstrom und der erfaßten Heizleistung der Momentanwert der Dampfnässe ermittelt wird.

2. Verfahren nach Anspruch 1, **dadurch gekennzeichnet,** daß der Druck des Naßdampfes erfaßt wird und der Momentanwert der Dampfnässe auf Grundlage des momentanen Druckes des Naß-Dampfes, des momentanen Kondensat-Massenstromes und der momentanen Heizleistung ermittelt wird.

3. Verfahren nach Anspruch 1 oder 2, **dadurch gekennzeichnet,** daß die Temperatur des Naßdampfes erfaßt wird, und der Momentanwert der Dampfnässe auf Grundlage der momentan gemessenen Temperatur, des momentanen Kondensatmassenstromes und der momentanen Heizleistung ermittelt wird.

4. Verfahren nach einem der Ansprüche 1 bis 3, **dadurch gekennzeichnet,** daß die Kühleinrichtung von einem Kühlfluid durchströmt wird und die Ausgangstemperatur des Kühlfluides nach Durchlauf der Kühleinrichtung erfaßt wird.

5. Verfahren nach Anspruch 4, **dadurch gekennzeichnet,** daß die Eingangstemperatur des Kühlfluides vor Eintritt in die Kühleinrichtung erfaßt wird.

6. Verfahren nach Anspruch 4 oder 5, **dadurch gekennzeichnet,** daß die Eingangstemperatur des Kühlfluides auf einem vorbestimmten Wert gehalten wird.

7. Verfahren nach einem der Ansprüche 1 bis 6, **dadurch gekennzeichnet,** daß der der Kühleinrichtung zugeführte Dampf mit dem Kühlfluid in Kontakt tritt.

8. Verfahren nach Anspruch 7, **dadurch gekennzeichnet,** daß das sich in der Kühleinrichtung bildende Kondensat sich in das Kühlfluid mischt.

9. Verfahren nach einem der Ansprüche 4 bis 8, **dadurch gekennzeichnet,** daß das Kühlfluid durch einen Kühlkreislauf zirkuliert, der die Kühleinrichtung und eine Wärmetauscheinrichtung umfaßt, wobei die Wärmetauscheinrichtung das Kühlfluid auf die genannte Eingangstemperatur abkühlt.

10. Verfahren nach einem der Ansprüche 7 bis 9, **dadurch gekennzeichnet,** daß aus dem Kühlkreislauf permanent Fluid abgezweigt wird.

11. Verfahren nach Anspruch 10, **dadurch gekennzeichnet,** daß das Volumen des in dem Kühlkreislauf aufgenommenen Fluides im wesentlichen konstant gehalten wird, und der aus dem Kühlkreislauf abgezweigte Massenstrom im wesentlichen dem in der Kühleinrichtung zeitgleich niedergeschlagenen Kondensat-Massenstrom entspricht.

**12.** Verfahren nach einem der Ansprüche 1 bis 11, **dadurch gekennzeichnet,** daß der Kondensat-Massenstrom im wesentlichen konstant gehalten wird.

**13.** Verfahren nach wenigstens einem der Ansprüche 1 bis 12, **dadurch gekennzeichnet,** daß das niedergeschlagene Kondensat, das in dem Kühlkreislauf zirkulierende Fluid, oder das aus dem Kühlkreislauf abgezweigte Fluid auf seinen Gehalt an nicht-kondensierbaren Gasen analysiert wird.

**14.** Verfahren nach Anspruch 13, **dadurch gekennzeichnet,** daß das Kondensat und/oder das aus dem Kühlkreislauf abgezweigte Fluid durch ein Kapillarrohr geleitet wird, wobei etwaige in dem Kondensat enthaltene Anteile nicht-kondensierbarer Gase in dem Kapillarrohr Gasblasenabschnitte bilden.

**15.** Verfahren nach Anspruch 13 oder 14, **dadurch gekennzeichnet,** daß der Anteil an nicht-kondensierbaren Gasen bei der Bestimmung des kalorischen Zustandes des Naßdampfes berücksichtigt wird.

**16.** Verfahren nach einem der Ansprüche 1 bis 15, **dadurch gekennzeichnet,** daß der zur Bestimmung der Dampfnässe abgezweigte Teil des Naßdampfes über eine wärmeisolierte Leitungseinrichtung abgezweigt wird.

**17.** Verfahren nach einem der Ansprüche 1 bis 16, **dadurch gekennzeichnet,** daß der zur Bestimmung der Dampfnässe abgezweigte Teil des Naßdampfes über eine Leitungseinrichtung abgezweigt wird, die durch den Naßdampf außenseitig beheizt ist.

**18.** Verfahren nach einem der Ansprüche 4 bis 17, **dadurch gekennzeichnet,** daß der Druck des Kühlfluides in der Kühleinrichtung im wesentlichen gleich dem Druck des Naßdampfes ist.

**19.** Verfahren nach einem der Ansprüche 1 bis 18, **dadurch gekennzeichnet,** daß die Bestimmung des Momentan-Wertes der Dampfnässe mittels einer Rechnereinrichtung erfolgt, wobei die Rechnereinrichtung den Momentanwert der Dampfnässe auf Grundlage des momentanen Kondensat-Massenstromes, der momentanen Heizleistung sowie der momentanen Temperatur und/oder dem momentanen Druck des Naßdampfes errechnet.

**20.** Vorrichtung zur Bestimmung der Dampfnässe von Naßdampf mit

einer Naßdampfzufuhreinrichtung (1), einer Kühleinrichtung (12) zum Kondensieren einer durch die Naßdampfzufuhreinrichtung (1) zugeführten Naßdampfmenge,
einer Kondensatableitungseinrichtung (14,31') zum Ableiten des Kondensates aus der Kühleinrichtung,
einer Kondensatmengen-Erfassungseinrichtung (41,41') zum Erfassen des Massenstromes des sich bildenden Kondensates,
einer Heizleistungserfassungseinrichtung (29,33,34) zur Erfassung der Heizleistung des der Kühleinrichtung (12) zugeführten Naßdampfes und
einer Rechnereinrichtung (19) zur Berechnung des Momentanwertes der Dampfnässe nach Maßgabe des Kondensat-Massenstromes ($m_D$) und der Heizleistung des sich in der Kühleinrichtung (12) niederschlagenden Naßdampfes.

**21.** Vorrichtung nach Anspruch 20, **dadurch gekennzeichnet,** daß die Kühleinrichtung (12) mit einer Wärmedämmeinrichtung (15) umgeben ist, zur Unterdrückung eines Wärmeüberganges zwischen der Kühleinrichtung (12) und der Umgebung.

**22.** Vorrichtung nach Anspruch 20 oder 21, **dadurch gekennzeichnet,** daß die Heizleistungserfassungseinrichtung (29,33,34) die Erwärmung eines die Kühleinrichtung (12) durchlaufenden Kühlfluides erfaßt.

**23.** Vorrichtung nach Anspruch 22, **dadurch gekennzeichnet,** daß die Heizleistungserfassungseinrichtung (29,33,34) eine erste Temperaturmeßstelle (33) zur Erfassung der Eingangstemperatur des Kühlfluides und eine zweite Temperaturmeßstelle (34) zur Erfassung einer Kühlfluidausgangstemperatur aufweist.

**24.** Vorrichtung nach Anspruch 23, **dadurch gekennzeichnet,** daß die zweite Temperaturmeßstelle (34) innerhalb der die Kühleinrichtung (12) umgebenden Wärmedämmungseinrichtung (15) angeordnet ist.

**25.** Vorrichtung nach einem der Ansprüche 20 bis 24, **dadurch gekennzeichnet,** daß die Kühleinrichtung (12) in eine Kühlfluid-Kreislaufanordnung (24) eingebunden ist, wobei das Kühlfluid durch die Kühlfluid-Kreislaufanordnung (24) zirkuliert.

26. Vorrichtung nach Anspruch 25, **dadurch gekennzeichnet,** daß die Kühlfluid-Kreislaufanordnung (24) einen Wärmetauscher (25) umfaßt zur Kühlung des in der Kühleinrichtung (12) erwärmten Kühlfluides.

27. Vorrichtung nach Anspruch 25 oder 26, **dadurch gekennzeichnet,** daß in der Kühlfluid-Kreislaufanordnung (24) eine Pumpeinrichtung (26) vorgesehen ist zum Umwälzen des Kühlfluides.

28. Vorrichtung nach einem der Ansprüche 20 bis 27, **dadurch gekennzeichnet,** daß eine Kühlfluidmassenstromerfassungseinrichtung (29) vorgesehen ist, zur Erfassung des der Kühleinrichtung (12) zugeführten Kühlfluid-Massenstromes ($\dot{m}_{KW}$).

29. Vorrichtung nach einem der Ansprüche 20 bis 28, **dadurch gekennzeichnet,** daß in der Kühleinrichtung (12) ein Mischbereich (30) vorgesehen ist, und daß der Naßdampf oder dessen Kondensat in dem Mischbereich (30) mit dem Kühlfluid in Kontakt tritt, wobei die Kühleinrichtung (12) einen Abfluß-Fluidweg (14) aufweist zum Ableiten des Kühlfluides gemeinsam mit dem untergemischten Kondensat.

30. Vorrichtung nach einem der Ansprüche 25 bis 29, **dadurch gekennzeichnet,** daß die Kühlfluid-Kreislaufanordnung (24) mit einer Abzweigeinrichtung (31) versehen ist zum Abzweigen von Kühlfluid oder einer Mischung von Kühlfluid und Kondensat aus der Kühlfluidkreislaufanordnung (24).

31. Vorrichtung nach Anspruch 30, **dadurch gekennzeichnet,** daß die Kondensatmengen-Erfassungseinrichtung (41) an die Abzweigeinrichtung (31) angeschlossen ist zur Erfassung des Kondensatmassenstromes anhand des aus dem Kühlfluid-Kreislauf abgezweigten Massenstromes.

32. Vorrichtung nach wenigstens einem der Ansprüche 20 bis 31, **dadurch gekennzeichnet,** daß eine erste A/D-Wandlerein-richtung (35) vorgesehen ist, zur Erzeugung eines die Eingangstemperatur des Kühlfluides repräsentierenden Signales.

33. Vorrichtung nach wenigstens einem der Ansprüche 20 bis 32, **dadurch gekennzeichnet,** daß eine zweite A/D-Wandler-einrichtung (36) vorgesehen ist zur Erzeugung eines die Ausgangstemperatur des Kühlfluides oder der Mischung aus Kühlfluid und Kondensat repräsentierenden Signales.

34. Vorrichtung nach wenigstens einem der Ansprüche 20 bis 33, **dadurch gekennzeichnet,** daß eine dritte A/D-Wandlereinrichtung vorgesehen ist, zur Erzeugung eines den Kondensat-Massenstrom ($\dot{m}_D$)repräsentierenden Signales.

35. Vorrichtung nach einem der Ansprüche 20 bis 46, **dadurch gekennzeichnet,** daß eine Einstellvorrichtung (32) vorgesehen ist, zur Einstellung des Kondensat-Massenstromes ($m_D$) oder des abgezweigten Kühlfluid/Kondensat-Massenstromes.

36. Vorrichtung nach wenigstens einem der Ansprüche 32 bis 34, **dadurch gekennzeichnet,** daß die genannten A/D-Wandlereinrichtungen an die Rechnereinrichtung (19) angeschlossen sind.

37. Vorrichtung nach Anspruch 36, **dadurch gekennzeichnet,** daß die Rechnereinrichtung (19) eine Speichereinrichtung umfaßt, und daß in der Speichereinrichtung ein Datensatz zur Errechnung der Dampfnässe auf Grundlage der an die Recheneinrichtung angelegten Signale, gespeichert ist.

38. Vorrichtung nach Anspruch 37, **dadurch gekennzeichnet,** daß die Recheneinrichtung mit der Einstelleinrichtung (32) gekoppelt ist, zur Einstellung des abgezweigten Kondensat- oder Kühlfluid/Kondensat-Massenstromes.

**FIG.1**

**FIG.2**

FIG.3

**FIG.4**

**FIG.5**